# EUROPÄISCHE PATENTSCHRIFT

(11) **EP 2 663 527 B1**
(45) Veröffentlichungstag und Bekanntmachung des Hinweises auf die Patenterteilung: **19.11.2014**
(21) Anmeldenummer: 12700045.3
(22) Anmeldetag: 09.01.2012
(51) Int. Cl.: C01G 53/00, C01B 13/36

(54) **VERFAHREN ZUR HERSTELLUNG VON ÜBERGANGSMETALLHYDROXIDEN**
METHOD FOR PRODUCING TRANSITION METAL HYDROXIDES
PROCÉDÉ DE PRODUCTION D'HYDROXYDES DE MÉTAUX DE TRANSITION

(30) Priorität: 10.01.2011 EP 11150470
(43) Veröffentlichungstag der Anmeldung: 20.11.2013
(73) Patentinhaber: BASF SE, 67056 Ludwigshafen (DE)
(72) Erfinder: KRIPPELS, Uwe, 67063 Ludwigshafen (DE); SCHRÖDLE, Simon, 86609 Donauwörth (DE)
(86) Internationale Anmeldenummer: PCT/EP2012/050219
(87) Internationale Veröffentlichungsnummer: WO 2012/095381

(56) Entgegenhaltungen:
- DE-A1-102006 015 538
- DE-A1-102007 039 471

## Beschreibung

Die vorliegende Erfindung betrifft ein Verfahren zur Herstellung von Übergangsmetallhydroxiden mit einem mittleren Partikeldurchmesser im Bereich von 6 bis 12 µm (D50), dadurch gekennzeichnet, dass man in einem Rührgefäß mindestens eine Lösung von mindestens einem Übergangsmetallsalz mit mindestens einer Lösung von mindestens einem Alkalimetallhydroxid vereint und dadurch eine wässrige Suspension von Übergangsmetallhydroxid herstellt, und dass man in mindestens einem weiteren Kompartiment kontinuierlich jeweils in einem Anteil der Suspension eine mechanische Leistung im Bereich von 50 bis 10.000 W/l einbringt, bezogen auf den Anteil der Suspension, und danach den Anteil in das Rührgefäß rückführt.

Sekundärbatterien, Akkumulatoren, Akkus oder "wiederaufladbare Batterien" sind nur einige Ausführungsformen, um elektrische Energie nach der Erzeugung zu speichern und bei Bedarf nutzen (brauchen) zu können. Wegen der deutlich besseren Leistungsdichte ist man in jüngerer Zeit von den wasserbasierten Sekundärbatterien abgekommen und entwickelt solche Batterien, bei denen der Ladungstransport durch Lithium-Ionen bewerkstelligt wird.

Für die Eigenschaften einer Lithium-Ionen-Batterien ist das Elektrodenmaterial von entscheidender Bedeutung. Dabei haben Lithium-haltige Übergangsmetallmischoxide eine besondere Bedeutung erlangt, beispielsweise Spinelle und schichtförmig angeordnete Mischoxide, insbesondere Lithium-haltige Mischoxide von Nickel, Mangan und Kobalt, siehe beispielsweise EP 1 189 296. Dabei spielt aber nicht nur die Stöchiometrie des Elektrodenmaterials eine Rolle, sondern auch andere Eigenschaften wie Morphologie und Oberflächeneigenschaften.

Zur Herstellung von entsprechenden Mischoxiden bedient man sich in der Regel eines zweistufigen Verfahrens. In einer ersten Stufe stellt man ein schwerlösliches Salz des oder der Übergangsmetalle her, indem man es aus einer Lösung ausfällt, beispielsweise ein Carbonat oder ein Hydroxid. Dieses schwerlösliche Salz wird vielfach auch als Vorstufe oder englisch als "precursor" bezeichnet. In einer zweiten Stufe vermischt man das ausgefällte Salz des oder der Übergangsmetalle mit einer Lithiumverbindung, beispielsweise Li₂CO₃, LiOH oder Li₂O, und kalziniert bei hohen Temperaturen, beispielsweise bei 600 bis 1100°C.

Bisherige Lithium-Ionen-Batterien haben noch Verbesserungspotenzial, insbesondere was die Energiedichte betrifft. Dazu sollte das Kathodenmaterial eine hohe spezifische Kapazität aufweisen. Außerdem ist es vorteilhaft, wenn man das Kathodenmaterial auf einfache Weise zu Elektrodenschichten einer Dicke von 20 µm bis 200 µm verarbeiten kann, welche eine hohe Dichte aufweisen sollen, um möglichst eine hohe Energiedichte (pro Volumeneinheit) zu erzielen.

In WO 2009/024424 wird ein Verfahren zur Herstellung von basischen Übergangsmetallhydroxiden offenbart, das aus drei Schritten besteht. Diese lassen sich wie folgt charakterisieren:
a) Bereitstellen von mindestens einer ersten und einer zweiten Eduktlösung,
b) Zusammenführen von mindestens der ersten und der zweiten Eduktlösung in einem Reaktor und Erzeugung einer homogen durchmischen Reaktionszone mit einem spezifischen mechanischen Leistungseintrag von mindestens 2 Watt/Liter und Erzeugung einer Produktsuspension, bestehend aus unlöslichem Produkt und einer, durch Einstellung eines Laugenüberschusses übersättigten Mutterlauge, mit einem pH-Wert von 10 bis 12.
c) Partielle Abtrennung der Mutterlauge vom ausgefällten Produkt zur Einstellung von Feststoffgehalten von mindestens 150 g/l in der Suspension durch Klär-, oder Filterelemente.

Eine Eintragung von größeren Beträgen an mechanischer Energie in große Volumina von Lösungen oder Suspensionen ist jedoch apparativ schwierig. Es bestand daher die Aufgabe, ein Verfahren bereit zu stellen, durch das man geeignete Ausgangsmaterialien für Batterien herstellen kann.

Dementsprechend wurde das eingangs definierte Verfahren gefunden.

Das im Folgenden beschriebene Verfahren zur Herstellung von Übergangsmetallhydroxiden wird im Rahmen der vorliegenden Erfindung auch kurz als erfindungsgemäßes Verfahren bezeichnet.

Das erfindungsgemäße Verfahren betrifft die Herstellung von Übergangsmetallhydroxiden. Dabei werden im Rahmen der vorliegenden Erfindung unter "Übergangsmetallhydroxiden" nicht nur stöchiometrisch reine Übergangsmetallhydroxide subsumiert, sondern insbesondere auch Verbindungen, die neben Übergangsmetallionen und Hydroxidionen auch Anionen, die von Hydroxidionen verschieden sind, beispielsweise Oxidionen und Carbonationen, und/oder Kationen, die von Übergangsmetallkationen verschieden sind, aufweisen, insbesondere Alkalimetallionen. Bevorzugte Alkalimetallionen sind Kalium- und insbesondere Natriumionen. Dabei müssen die molaren Anteile von Anionen, die von Hydroxidionen verschieden sind, und von Kationen, die von Übergangsmetallkationen verschieden sind, nicht identisch sein.

In einer Ausführungsform der vorliegenden Erfindung weist Übergangsmetallhydroxid insgesamt 0,01 bis 55 mol-%, bevorzugt 0,2 bis 50 mol-% Anionen auf, die von Hydroxidionen verschieden sind, bezogen auf die Gesamtzahl an Anionen. Bevorzugtes Anion, welches von Übergangsmetall verschieden ist, ist Oxid.

In einer Ausführungsform der vorliegenden Erfindung weist Übergangsmetallhydroxid 0,01 bis 10 mol-%, bevorzugt 0,2 bis 6,0 mol-% Kationen auf, die von Übergangsmetallkationen verschieden sind, bezogen auf den Gehalt an Übergangsmetallkationen. Bevorzugtes Kation, welches von Übergangsmetall verschieden ist, ist Al³⁺.

In einer Ausführungsform der vorliegenden Erfindung handelt es sich bei Übergangsmetallhydroxid um ein Oxihydroxid, ohne messbare Anteile an Anionen X oder Carbonat.

In einer Ausführungsform der vorliegenden Erfindung wird Übergangsmetall gewählt aus Cr, V, Mn, Ni, Fe, Co, Zn, Ti, Zr und Mischungen von einem oder mehreren der vorstehend genannten miteinander oder mit Alkalimetall, Aluminium oder Magnesium, bevorzugt aus Mischungen von Ni, Mn, Co und gegebenenfalls einem oder mehrere weiteren Metall, gewählt aus Alkalimetall, Aluminium und Magnesium.

In einer Ausführungsform der vorliegenden Erfindung entspricht Übergangsmetallhydroxid der allgemeinen Formel (I)

NiₐMn_{b}M_{c}Oₓ(OH)_{y}X_{w}(CO₃)ₜ (I)

wobei die Variablen wie folgt definiert sind:
- M: Co oder Kombinationen von Co und mindestens einem Element, gewählt aus Zn, Cu, Ti,
- Zr, Al: und Mg,
- X: gewählt aus Halogenid, beispielsweise Bromid, bevorzugt Chlorid, besonders bevorzugt Fluorid, weiterhin Sulfat, Nitrat oder Carboxylat, bevorzugt C₁-C₇-Carboxylat, insbesondere Benzoat oder Acetat,
- a: eine Zahl im Bereich von 0,15 bis 0,8, bevorzugt 0,18 bis 0,52,
- b: eine Zahl im Bereich von 0,1 bis 0,8, bevorzugt 0,2 bis 0,7,
- c: eine Zahl im Bereich von 0,02 bis 0,5, bevorzugt 0,05 bis 0,35,
wobei a + b + c = 1,0,
0 ≤ w ≤ 0,3, bevorzugt 0,001 < w < 0,01,
0 ≤ x < 1, bevorzugt 0,3 < x < 1,
1 < y ≤ 2, bevorzugt 1 < y < 1,7,
0 ≤ t ≤ 0,3.

In einer bevorzugten Ausführungsform ist X = Sulfat und w = 0,005.

Das erfindungsgemäße Verfahren führt man in einem Rührgefäß durch, beispielsweise in einem absatzweise oder vorzugsweise kontinuierlich betriebenen Rührkessel. Dabei kann der Rührkessel Anbauten, Einbauten und/oder Zusätze aufweisen.

Zur Durchführung des erfindungsgemäßen Verfahrens vereinigt man mindestens eine wässrige Lösung von mindestens einem Übergangsmetallsalz mit mindestens einer wässrigen Lösung von mindestens einem Alkalimetallhydroxid.

Im Rahmen der vorliegenden Erfindung wird wässrige Lösung von mindestens einem Übergangsmetallsalz auch kurz als wässrige Lösung von Übergangsmetallsalz(en) bezeichnet.

Wässrige Lösung von Übergangsmetallsalz(en) kann mindestens ein Übergangsmetallsalz enthalten, bevorzugt zwei oder drei Übergangsmetallsalze, insbesondere Salze von zwei oder drei Übergangsmetallen. Als Übergangsmetallsalze sind insbesondere wasserlösliche Salze von Übergangsmetall(en), geeignet, d. h. Salze, die in destilliertem Wasser eine Löslichkeit von mindestens 25 g/l aufweisen, bevorzugt mindestens 50 g/l, bestimmt bei Zimmertemperatur. Bevorzugte Übergangsmetallsalze, insbesondere Salze von Nickel, Kobalt und Mangan, sind beispielsweise Carbonsäuresalze, insbesondere Acetate, weiterhin Sulfate, Nitrate, Halogenide, insbesondere Bromide oder Chloride, von Übergangsmetall, wobei das oder die Übergangsmetalle vorzugsweise in der Oxidationsstufe +2 vorliegen. Eine solche Lösung hat vorzugsweise einen pH-Wert im Bereich von 2 bis 7, besonders bevorzugt im Bereich von 2,5 bis 6.

Als Übergangsmetalle sind beispielsweise die Übergangsmetalle der ersten Periode geeignet, weiterhin Zirkonium und Molybdän. Bevorzugt sind Cr, V, Ni, Mn, Co, Fe, Zn, Zr, Cr und Ti. Bevorzugt wählt man Mischungen von mindestens zwei der vorstehend genannten Übergangsmetalle, besonders bevorzugt von mindestens drei oder von mindestens zwei der vorstehend genannten Übergangsmetalle mit Magnesium, Aluminium oder Calcium.

In einer Ausführungsform der vorliegenden Erfindung wählt man Übergangsmetall aus Cr, V, Ni, Mn, Co, Fe, Zn, Zr, Cr und Ti und Mischungen von einem oder mehreren der vorstehend genannten Übergangsmetalle, besonders bevorzugt von mindestens drei oder von mindestens zwei der vorstehend genannten Übergangsmetalle mit Magnesium, Aluminium oder Calcium.

In einer Ausführungsform der vorliegenden Erfindung wählt man die Übergangsmetalle als Kombination von Ni, Mn und Co.

In einer Ausführungsform der vorliegenden Erfindung kann man von einer wässrigen Lösung von Übergangsmetallsalze(en) ausgehen, die neben Wasser ein oder mehrere organische Lösungsmittel enthält, beispielsweise Ethanol, Methanol oder Isopropanol, beispielsweise bis zu 15 Vol.-%, bezogen auf Wasser. In einer anderen Ausführungsform der vorliegenden Erfindung geht man von einer wässrigen Lösung von Übergangsmetallsalze(en) aus, die weniger als 0,1 Gew.-%, bezogen auf Wasser, oder vorzugsweise kein organisches Lösungsmittel enthält.

In einer Ausführungsform der vorliegenden Erfindung enthält eingesetzte wässrige Lösung von Übergangsmetallsalze(en) Ammoniak, Ammoniumsalz oder ein oder mehrere organische Amine, beispielsweise Methylamin oder Ethylendiamin. Ammoniak oder organische Amine können separat zugefügt sein, oder sie können durch Dissoziation von Komplexsalzen von Übergangsmetallsalz in wässriger Lösung gebildet werden. Bevorzugt enthält wässrige Lösung von Übergangsmetallsalze(en) weniger als 10 mol-% Ammoniak oder organisches Amin, bezogen auf Übergangsmetall M. In einer besonders bevorzugten Ausführungsform der vorliegenden Erfindung enthält wässrige Lösung von Übergangsmetallsalze(en) messbare Anteile weder an Ammoniak noch an organischem Amin.

Bevorzugte Ammoniumsalze können beispielsweise Ammoniumsulfat und Ammoniumsulfit sein.

Wässrige Lösung von Übergangsmetallsalz(en) kann beispielsweise eine Gesamtkonzentration von Übergangsmetall(en) im Bereich von 0,01 bis 5 mol/l Lösung aufweisen, bevorzugt sind 1 bis 3 mol/l Lösung.

In einer Ausführungsform der vorliegenden Erfindung passt man das Molverhältnis von Übergangsmetallen in wässriger Lösung von Übergangsmetallsalze(en) an die gewünschte Stöchiometrie im Kathodenmaterial bzw. Übergangsmetallmischoxid an. Dabei ist gegebenenfalls zu berücksichtigen, dass die Löslichkeiten von verschiedenen Übergangsmetallcarbonaten unterschiedlich sein können.

Wässrige Lösung von Übergangsmetallsalz(en) kann neben den Gegenionen des oder der Übergangsmetallsalze ein oder mehrere weitere Salze enthalten. Dabei handelt es sich vorzugsweise um solche Salze, die keine schwerlöslichen Salze mit M bilden, oder um Hydrogencarbonate von beispielsweise Natrium, Kalium, Magnesium oder Calcium, die bei pH-Wert-Änderung zur Ausfällung von Carbonaten Anlass geben können.

In einer anderen Ausführungsform der vorliegenden Erfindung enthält wässrige Lösung von Übergangsmetallsalz(en) keine weiteren Salze.

In einer Ausführungsform der vorliegenden Erfindung kann wässrige Lösung von Übergangsmetallsalz(en) ein oder mehrere Additive enthalten, die gewählt sein können aus Bioziden, Komplexbildnern wie beispielsweise Ammoniak, Chelatbildnern, Tensiden, Reduktionsmitteln, Carbonsäuren und Puffern. In einer anderen Ausführungsform der vorliegenden Erfindung enthält wässrige Lösung von Übergangsmetallsalz(en) keine Additive.

Beispiele für geeignete Reduktionsmittel, die in wässriger Lösung von Übergangsmetallsalz(en) sein können, sind Sulfite, insbesondere Natriumsulfit, Natriumhydrogensulfit, Kaliumsulfit, Kaliumbisulft, Ammoniumsulfit, weiterhin Hydrazin und Salze von Hydrazin, beispielsweise das Hydrogensulfat, weiterhin wasserlösliche organische Reduktionsmittel wie beispielsweise Ascorbinsäure oder Aldehyde.

Man vereinigt mit wässriger Lösung von mindestens einem Alkalimetallhydroxid, beispielsweise durch Zugabe von Lösung von Alkalimetallhydroxid zu wässriger Lösung von Übergangsmetallsalze(en). Besonders bevorzugte Alkalimetallhydroxide sind Natriumhydroxid und Kaliumhydroxid.

In einer Ausführungsform der vorliegenden Erfindung bewirkt man die Fällung durch Zugabe einer wässrigen Lösung von Natriumhydroxid oder Kaliumhydroxid zu einer wässrigen Lösung von Acetaten, Sulfaten oder Nitraten von Übergangsmetall(en).

Wässrige Lösung von Alkalimetallhydroxid kann eine Konzentration von Hydroxid im Bereich von 0,1 bis 3 mol/l aufweisen, bevorzugt ist 1 bis 2,5 mol/l.

Wässrige Lösung von Alkalimetallhydroxid kann ein oder mehrere weitere Salze enthalten, beispielsweise Ammoniumsalze, insbesondere Ammoniumhydroxid, Ammoniumsulfat oder Ammoniumsulfit. In einer Ausführungsform kann man ein molares Verhältnis NH₃ : Übergangsmetall von 0,01 bis 0,9, besonders bevorzugt 0,08 bis 0,65 einstellen.

In einer Ausführungsform der vorliegenden Erfindung kann wässrige Lösung von Alkalimetallhydroxid Ammoniak oder ein oder mehrere organische Amine, beispielsweise Methylamin, enthalten.

In einer anderen Ausführungsform der vorliegenden Erfindung kann man ein oder mehrere Ammoniumsalze, Ammoniak oder ein oder mehrere organische Amine gesondert zur Reaktionsmischung zugeben.

Das Vereinen kann man in einem oder mehreren Schritten jeweils kontinuierlich oder diskontinuierlich ausüben. So kann man über eine oder mehrere Zulaufstellen Lösung von Alkalimetallhydroxid in das Rührgefäß einspeisen, und zwar so, dass die jeweilige Zulaufstelle oberhalb des Flüssigkeitsstands oder unterhalb liegt. Insbesondere kann man genau in die durch den Rührer erzeugte Trombe eines Rührkessels eindosieren. So ist es weiterhin möglich, wässrige Lösung von Übergangsmetallsalz(en) über eine oder mehrere Zulaufstellen in das Rührgefäß dosieren, und zwar so, dass die jeweilige Zulaufstelle oberhalb des Flüssigkeitsstands oder unterhalb liegt. Insbesondere kann man genau in die durch den Rührer erzeugte Trombe eines Rührkessels eindosieren.

In einer Ausführungsform der vorliegenden Erfindung geht man so vor, dass man eine wässrige Lösung von Alkalimetallhydroxid mit mehreren wässrigen Lösungen von je einem Übergangsmetallsalz über jeweils getrennte Zulaufstellen in das Rührgefäß einspeist. In einer anderen Ausführungsform der vorliegenden Erfindung führt man das Vereinen so durch, dass man eine wässrige Lösung von Alkalimetallhydroxid mit einer wässrigen Lösung, die alle zur Durchführung des erfindungsgemäßen Verfahrens gewünschten Übergangsmetalle als Salze enthält, über jeweils getrennte Zulaufstellen in das Rührgefäß einspeist. Die letztgenannte Vorgehensweise hat den Vorteil, dass man Inhomogenitäten in den Konzentrationsverhältnissen der verschiedenen Übergangsmetalle leichter verhindern kann.

Durch das Vereinen von wässriger Lösung von Übergangsmetallsalz(en) mit mindestens einer Lösung von Alkalimetallhydroxid stellt man eine wässrige Suspension von Übergangsmetallhydroxid her, da Übergangsmetallhydroxid ausfällt. Dabei enthält die wässrige kontinuierliche Phase, die im Rahmen der vorliegenden Erfindung auch Mutterlauge genannt wird, wasserlösliche Salze sowie gegebenenfalls weitere, sich in Lösung befindliche Additive. Als wasserlösliche Salze kommen beispielsweise Alkalimetallsalze der Gegenionen von Übergangsmetall in Frage, beispielsweise Natriumacetat, Kaliumacetat, Natriumsulfat, Kaliumsulfat, Natriumnitrat, Kaliumnitrat, Natriumhalogenid, Kaliumhalogenid, einschließlich der korrespondierenden Ammoniumsalze wie beispielsweise Ammoniumnitrat, Ammoniumsulfat und/oder Ammoniumhalogenid. Ganz besonders bevorzugt enthält Mutterlauge Natriumchlorid, Kaliumchlorid oder Ammoniumchlorid. Weiterhin kann Mutterlauge zusätzliche Salze, gegebenenfalls eingesetzte Additive sowie gegebenenfalls überschüssiges Alkalimetallhydroxid enthalten, weiterhin nicht ausgefälltes Übergangsmetall als Übergangsmetallsalz.

Vorzugsweise liegt der pH-Wert der Mutterlauge im Bereich von 9 bis 12,7, besonders bevorzugt im Bereich von 10,5 bis 12,2, gemessen nach Abkühlen der Mutterlauge auf 23°C.

Es wurde nun gefunden, dass man die Morphologie und die Oberflächeneigenschaften von Übergangsmetallmischoxiden nicht nur in der Kalzinierungsstufe, sondern auch in der Stufe der Herstellung der Vorstufe beeinflussen kann. Dabei wurde gefunden, dass man durch Eintragen von größeren Beträgen an mechanischer Leistung die Morphologie kontrollieren kann. Eine Eintragung von größeren Beträgen an mechanischer Energie in größere Volumina ist jedoch apparativ schwierig. Zur Überwindung dieser Schwierigkeiten bringt man in mindestens einem weiteren Kompartiment kontinuierlich jeweils in einem Anteil der Suspension eine mechanische Leistung im Bereich von 50 bis 10.000 W/l, bevorzugt 200 bis 2.500 W/l (Watt pro Liter) ein, bezogen auf den Anteil der Suspension, und führt danach den Anteil in das Rührgefäß zurück.

In einer Ausführungsform der vorliegenden Erfindung ist die Leistungsdichte, also Leistung pro Volumeneinheit, die man im weiteren Kompartiment einbringt, etwa 50 bis 100 mal so hoch wie im Rührgefäß.

Als separates Kompartiment kann man dabei Pumpen, Einsätze, Mischaggregate, Nassmühlen, Homogenisatoren und Rührkessel wählen, wobei als weitere Kompartimente ausgewählte Rührkessel vorzugsweise ein deutlich kleineres Volumen aufweisen als das eingangs beschriebene Rührgefäß.

Beispiele für besonders geeignete Pumpen sind Kreiselpumpen und Peripheralradpumpen.

Als separates Kompartiment kann ein separates Gefäß dienen oder ein Einsatz in das Rührgefäß. Dabei werden unter Einsätzen solche Anlagenteile verstanden, die im Volumen des eigentlichen Rührgefäßes sind, die aber baulich abgetrennt sind und die ein eigenes Mischorgan aufweisen. Beispielsweise kann man als Einsatz ein Rohr wählen, welches in das Rührgefäß und die Reaktionsmischung eintaucht und mit Hilfe eines weiteren Rührers, beispielsweise eines Rührers mit Propellern, durchmischt wird. Dadurch schafft man ein Kompartiment im Rührgefäß. Der Anteil des Kompartimentvolumens zum Gesamtvolumen ist 0,01 bis 15 Vol.-%, bevorzugt 0,1 bis 10 Vol.-%. In einer Variante können mehrere solcher Kompartimente vorhanden sein, die gleiche oder verschiedene Größe aufweisen können.

Unter "kontinuierlich einbringen" wird dabei verstanden, dass man während der Durchführung der Fällung in kürzeren Abständen mehrere kleine Volumina von entstandener Suspension oder ständig einen gewissen Teilstrom von entstandener Suspension aus dem Rührgefäß abzieht, mechanische Energie einbringt und anschließend den betreffenden Anteil wieder in das Rührgefäß rückführt (zurückführt).

Das Einbringen von mechanischer Energie in einem Rührkessel kann beispielsweise durch kräftiges Rühren erfolgen. Ein derartiges Rühren ist deutlich einfacher als in einem (großen) Rührgefäß.

In einer Variante der vorliegenden Erfindung kann man mechanische Energie zumindest anteilig durch Ultraschall einbringen.

Kleine Volumina können dabei bis zu 0,1 bis 10 % des eingangs beschriebenen Rührgefäßes ausmachen, beispielsweise im Falle von Rührkesseln, hingegen im Falle von Pumpen oder Nassmühlen auch weniger, beispielsweise 0,01 bis 0,099%.

In einer Ausführungsform der vorliegenden Erfindung ist an das Rührgefäß ein separates Gefäß angebaut, beispielsweise ist es über einen Umpumpkreis mit dem Rührgefäß verbunden. In einer anderen Ausführungsform der vorliegenden Erfindung sind an das Rührgefäß zwei oder mehr separate Gefäße angebaut, die über einen oder mehrere Umpumpkreise mit dem Rührgefäß verbunden sind.

Unter einem "Umpumpkreis" versteht man vorzugsweise eine Vorrichtung, die kontinuierlich eine Teilmenge des Reaktorinhalts aus dem Reaktor entnimmt, dem separatem Gefäß zuführt und nach Durchströmung des separaten Gefäßes wieder in den Reaktor zurückführt. Dabei wird zur Aufrechterhaltung der Strömung eine Pumpe eingesetzt. In einer besonderen Ausführungsform können im separaten Gefäß vorhandene Einrichtungen eine Pumpwirkung aufweisen, sodass ohne ein separates Pumporgan gearbeitet werden kann.

In einer Ausführungsform der vorliegenden Erfindung bringt man bei der Durchführung des erfindungsgemäßen Verfahrens eine mittlere Leistung im Bereich von 2 bis 25 W/l, bevorzugt 3 bis 17 W/l, bezogen auf gesamte Suspension.

In einer Ausführungsform der vorliegenden Erfindung bringt man 20 bis 80% der mechanischen Leistung im weiteren Kompartiment ein, bevorzugt mindestens 30%, besonders bevorzugt mindestens 40%.

In einer Ausführungsform der vorliegenden Erfindung kann man das erfindungsgemäße Verfahren bei einer Temperatur im Bereich von 20 bis 90°C durchführen, bevorzugt sind 30 bis 80°C, besonders bevorzugt 35 bis 75°C. Dabei wird die Temperatur im Rührgefäß bestimmt. Die Temperatur in dem oder den weiteren Gefäßen kann von der Temperatur im Rührgefäß abweichen.

Das erfindungsgemäße Verfahren kann man unter Luft, unter Inertgasatmosphäre, beispielsweise unter Edelgas- oder Stickstoffatmosphäre, oder unter reduzierender Atmosphäre durchführen. Als Beispiele für reduzierende Gase seien beispielsweise CO und SO₂ genannt. Bevorzugt arbeitet man unter Inertgasatmosphäre.

Das erfindungsgemäße Verfahren kann man bei beliebigem Druck durchführen, so lange wie der Dampfdruck der wässrigen Lösung bzw. Suspension nicht unterschritten wird. Geeignet sind beispielsweise 1 bis 10 bar, bevorzugt ist Normaldruck.

In einer Ausführungsform der vorliegenden Erfindung arbeitet man bei einem mittleren Feststoffgehalt im Bereich von 70 bis 1000 g/l, bestimmt im Rührgefäß, bevorzugt sind 80 bis 500 g/l.

In einer Ausführungsform der vorliegenden Erfindung arbeitet man mit einer mittleren Verweilzeit im Rührgefäß im Bereich von bis 2 bis 18 Stunden, bevorzugt 4 bis 14 Stunden.

In einer Ausführungsform der vorliegenden Erfindung arbeitet man mit einer mittleren Verweilzeit im weiteren Gefäß in einem Bereich von 0,01 bis 0,5 Sekunden, bevorzugt bis 0,2 Sekunden.

In einer Ausführungsform der vorliegenden Erfindung entspricht die mittlere Verweilzeit im weiteren Gefäß ein Tausendstel oder weniger der mittleren Verweilzeit im Rührgefäß, mindestens aber ein Millionstel.

Das erfindungsgemäße Verfahren kann man im stationären Zustand (englisch: steady state) oder im nicht-stationären Zustand durchführen, wobei ein stationärer Zustand, auch stationäre Fahrweise genannt, bevorzugt ist.

Nach dem erfindungsgemäßen Verfahren hergestelltes Übergangsmetallhydroxid erhält man mit einer sehr guten Morphologie. So weist es einen mittleren Partikeldurchmesser (D50) im Bereich von 6 bis 12 µm, bevorzugt 7 bis 10 µm auf. Dabei bezeichnet der mittlere Partikeldurchmesser (D50) im Rahmen der vorliegenden Erfindung den Medianwert der volumenbezogenen Partikeldurchmesser, wie er beispielsweise durch Lichtstreuung ermittelt werden kann. In einer Ausführungsform der vorliegenden Erfindung trennt man ausgefälltes Übergangsmetallhydroxid von der Mutterlauge ab. Der Begriff "Mutterlauge" ist vorstehend erläutert.

Wenn man das Abtrennen kontinuierlich durchführt, so kann man jeweils einen repräsentativen Anteil der entstandenen Suspension dem Reaktionsgefäß entnehmen, also beispielsweise jeweils ein Aliquot, oder einen nicht repräsentativen Anteil. So ist es beispielsweise möglich, schon bei der Entnahme aus dem Reaktionsgefäß gesondert Mutterlauge oder Übergangsmetallhydroxid zu entnehmen. Es ist auch möglich, schon bei der Entnahme aus dem Reaktionsgefäß Übergangsmetallhydroxid mit bestimmten Partikelgrößen bevorzugt zu entnehmen. Die beiden letztgenannten Ausführungsformen führen in der Regel dazu, dass man die Reaktion in nicht-stationärer Fahrweise durchführt.

Das Abtrennen kann beispielsweise durch Filtrieren, Zentrifugieren, Dekantieren, Sprühtrocknen oder Sedimentieren erfolgen oder durch eine Kombination von zwei oder mehr der vorstehend genannten Operationen. Als Vorrichtungen sind beispielsweise Filterpressen, Bandfilter, Hydrozyklone, Schrägklärapparate oder Kombination der vorstehend genannten Vorrichtungen geeignet.

An das Abtrennen kann man - insbesondere dann, wenn man das Abtrennen durch Filtration durchführt - einen oder mehrere Waschschritte anschließen. Man kann beispielsweise mit reinem Wasser waschen oder mit einer wässrigen Lösung von Alkalimetallcarbonat oder Alkalimetallhydroxid, insbesondere mit einer wässrigen Lösung von Natriumcarbonat, Kaliumcarbonat, Natriumhydroxid, Kaliumhydroxid, Lithiumhydroxid oder Ammoniak. Wasser ist bevorzugt.

Waschschritt(e) kann beispielsweise unter Anwendung von erhöhtem Druck oder erhöhter Temperatur, beispielsweise 30 bis 50°C, erfolgen. In einer anderen Variante führt man Waschschritt(e) bei Zimmertemperatur durch.

Die Effizienz der Waschschritte kann man durch analytische Maßnahmen überprüfen. So kann man beispielsweise den Gehalt an Übergangsmetall(en) M im Waschwasser analysieren.

Im Falle, dass man mit Wasser statt mit einer wässrigen Lösung von Alkalimetallcarbonat wäscht, kann man mit Hilfe von Leitfähigkeitsuntersuchungen am Waschwasser prüfen, ob noch wasserlösliche Substanzen, beispielsweise wasserlösliche Salze ausgewaschen werden können.

An das Abtrennen kann man einen oder mehrere Trocknungsschritte anschließen. Trocknungsschritt(e) kann man bei Zimmertemperatur oder bei erhöhter Temperatur durchführen. Beispielsweise kann man bei Temperaturen im Bereich von 30 bis 150°C trocknen.

Trocknungsschritt(e) kann man bei Normaldruck oder bei reduziertem Druck durchführen, beispielsweise bei einem Druck im Bereich von 10 mbar bis 500 mbar.

In einer Ausführungsform der vorliegenden Erfindung wird die Trocknung an Luft durchgeführt.

In einer Ausführungsform der vorliegenden Erfindung enthalten nach dem erfindungsgemäßen Verfahren hergestellte Vorstufen auch nach eventuellem Trocknungsschritt oder eventuellen Trocknungsschritten noch physikalisch gebundenes Wasser.

In einer Ausführungsform der vorliegenden Erfindung schließt man dem Abtrennen einen oder mehrere Waschschritte und gegebenenfalls einen oder mehrere Trocknungsschritte an.

Wassergehalt und Partikeldurchmesser von Vorstufe von Übergangsmetallmischoxid bestimmt man nach dem Abtrennen von der Mutterlauge, bevorzugt nach dem Trocknen.

In einer Ausführungsform der vorliegenden Erfindung trennt man Partikel von Übergangsmetallhydroxid ab, die einen Durchmesser von über 20 µm aufweisen, beispielsweise durch Sieben. Wenn man zu sieben wünscht, so führt man das Sieben vorzugsweise nach dem Trocknen durch. Bevorzugt trennt man Partikel von Übergangsmetallhydroxid ab, die einen Durchmesser von über 32 µm aufweisen, besonders bevorzugt über 50 µm.

Nach dem erfindungsgemäßen Verfahren erhält man Übergangsmetallhydroxid in partikulärer Form, kurz auch Vorstufe genannt. Nach dem erfindungsgemäßen Verfahren hergestellte Vorstufen eignen sich sehr gut zur Herstellung von Elektrodenmaterialien für Kathoden für Lithium-Ionen-Batterien.

Durch Ausübung des erfindungsgemäßen Verfahrens erhält man Übergangsmetallhydroxide in partikulärer Form, enthaltend mindestens ein Übergangsmetallhydroxid, gewählt aus Hydroxiden von Cr, V, Mn, Ni, Fe, Co, Zn, Ti und Zr, dadurch gekennzeichnet, dass die Partikel im Wesentlichen sphärisch sind, dass der Anteil an Partikeln mit einem Durchmesser größer als 50 µm kleiner als 0,1 Gew.-% ist, dass der mittlere Durchmesser (D50) im Bereich von 6 bis 12 µm liegt und dass die Stampfdichte mindestens (1,95+0,03·(D50)/µm) kg/l beträgt. Derartige Übergangsmetallhydroxide in partikulärer Form werden im Rahmen der vorliegenden Erfindung auch kurz als erfindungsgemäße Übergangsmetallhydroxide bezeichnet.

In einer Ausführungsform der vorliegenden Erfindung wird Übergangsmetall gewählt aus Cr, V, Mn, Ni, Fe, Co, Zn, Ti, Zr und Mischungen von einem oder mehreren der vorstehend genannten miteinander oder mit Akalimetall, Aluminium oder Magnesium, bevorzugt aus Mischungen von Ni, Mn, Co und gegebenenfalls einem oder mehrere weiteren Metall, gewählt aus Alkalimetall, Aluminium und Magnesium.

In einer Ausführungsform der vorliegenden Erfindung entspricht Übergangsmetallhydroxid der allgemeinen Formel (I)

NiₐMn_{b}M_{c}Oₓ(OH)_{y}X_{w}(CO₃)ₜ (I)

wobei die Variablen wie folgt definiert sind:
- M: Co oder Kombinationen von Co und mindestens einem Element, gewählt aus Zn, Cu, Ti, Zr, Al und Mg.
- X: gewählt aus Halogenid, beispielsweise Bromid, bevorzugt Chlorid, besonders bevorzugt Fluorid, weiterhin Sulfate Nitrat oder Carboxylat, bevorzugt C₁-C₇-Carboxylat, insbesondere Benzoat oder Acetat,
- a: eine Zahl im Bereich von 0,15 bis 0,8, bevorzugt 0,18 bis 0,52,
- b: eine Zahl im Bereich von 0,1 bis 0,8, bevorzugt 0,2 bis 0,7,
- c: eine Zahl im Bereich von 0,02 bis 0,5, bevorzugt 0,05 bis 0,35,
wobei a + b+c= 1,0,
0 ≤ w ≤ 0,3, bevorzugt 0,001 < w < 0,01,
0 ≤ x < 1, bevorzugt 0,3 < x < 1,
1 < y ≤ 2, bevorzugt 1 < y < 1,7,
0 ≤ t ≤ 0,3.

In einer bevorzugten Ausführungsform ist X = Sulfat und w = 0,005.

Partikel von erfindungsgemäß hergestelltem Übergangsmetallhydroxid sind im Wesentlichen sphärisch. Darunter ist zu verstehen, dass die Partikel von Übergangsmetallhydroxid im Wesentlichen kugelförmig sind.

Vorzugsweise enthält erfindungsgemäß hergestelltes Übergangsmetallhydroxid mindestens zwei verschiedene Übergangsmetalle, und zwar als Kationen, insbesondere als Kationen der Oxidationsstufe +2. Ganz besonders bevorzugt enthält erfindungsgemäßes Übergangsmetallhydroxid Mischungen von Ni, Mn, Co, und zwar als Kationen, insbesondere als Kationen der Oxidationsstufe +2, und gegebenenfalls einem oder mehrere weiteren Metall, gewählt aus Alkalimetall, Aluminium und Magnesium.

Unter "im Wesentlichen kugelförmig" werden dabei beispielsweise auch solche nicht streng kugelförmigen Partikel subsumiert, beispielsweise ellipsoide Partikel, bei denen die größte Halbachse und die kürzeste Halbachse sich um maximal 10% unterscheiden. Die Morphologie von Übergangsmetallhydroxid lässt sich durch Mikroskopie bestimmen, beispielsweise durch Lichtmikroskopie (LMI) oder durch Rasterelektronenmikroskopie (SEM).

Unter "im Wesentlichen kugelförmig" werden dabei auch solche Proben von nicht streng kugelförmigen Partikeln subsumiert, bei denen in einer repräsentativen Probe mindestens 95% (Gewichtsmittel) der Partikel eine im Wesentlichen kugelförmige Gestalt aufweist.

Der Partikeldurchmesser (D50) von erfindungsgemäß hergestelltern Übergangsmetallhydroxid liegt im Bereich von 2 bis 25 µm, bevorzugt im Bereich von 7 bis 16 und besonders bevorzugt bis 12 µm. Dabei bezeichnet Partikeldurchmesser (D50) im Rahmen der vorliegenden Erfindung den mittleren Partikeldurchmesser (Gewichtsmittel), wie er beispielsweise durch Lichtstreuung ermittelt werden kann.

Bei erfindungsgemäß hergestelltem Übergangsmetallhydroxid ist der Anteil an Partikeln mit einem Durchmesser größer als 50 µm kleiner als 0,1 Gew.-%, bevorzugt 0,001 bis 0,05 Gew.-%.

Bevorzugt ist bei erfindungsgemäß hergestelltem Übergangsmetallhydroxid der Anteil an Partikeln mit einem Durchmesser größer als 32 µm kleiner als 0,1 Gew.-%, bevorzugt 0.001 bis 0,05 Gew.-%.

Besonders bevorzugt ist bei erfindungsgemäß hergestelltem Übergangsmetallhydroxid der Anteil an Partikeln mit einem Durchmesser größer als 20 µm kleiner als 0,1 Gew.-%, bevorzugt 0,001 bis 0,05 Gew.-%.

In einer Ausführungsform der vorliegenden Erfindung weisen Partikel von erfindungsgemäß hergestelltem Übergangsmetallhydroxid einen Durchmesser (D99), bestimmt als Volumen- oder Gewichtsmittel, bis maximal 50 µm, bevorzugt maximal 32 µm und besonders bevorzugt maximal 20 µm auf.

In einer Ausführungsform der vorliegenden Erfindung weist erfindungsgemäß hergestelltes Übergangsmetallhydroxid nur geringe Anteile an Feinstaub auf, beispielsweise weniger als 2 Gew.-% an Partikeln mit einem Durchmesser von unter 1 µm.

Die Stampfdichte von erfindungsgemäß hergestelltem Übergangsmetallhydroxid beträgt mindestens (1,95+0,03·(D50)/µm) kg/l.

In einer Ausführungsform der vorliegenden Erfindung beträgt die Stampfdichte von erfindungsgemäß hergestelltem Übergangsmetallhydroxid maximal (2,30+0,03 (D50)/µm) kg/l.

Die Stampfdichte kann man beispielsweise im Wesentlichen gemäß DIN 53194 bzw. DIN ISO 787-11 bestimmen, vorteilhaft aber mit maximal 1250 Schlägen und mit kleineren Zylindern.

In einer Ausführungsform der vorliegenden Erfindung sind die Übergangsmetallkationen in den Partikeln von erfindungsgemäß hergestelltem Übergangsmetallhydroxid ohne Domänenbildung verteilt. Verschiedene Domänen lassen sich beispielsweise durch Elektronenstrahl-Mikroanalyse (EPMA, englisch Electron Probe X-ray Microanalysis) detektieren.

In einer Ausführungsform der vorliegenden Erfindung weisen Proben von erfindungsgemäß hergestelltem Übergangsmetallhydroxid eine gleichmäßige Zusammensetzung auf. Darunter ist zu verstehen, dass die Zusammensetzung der einzelnen Partikel vom Mittelwert der Probe um nicht mehr als 15 mol-%. bezogen auf den Gehalt des jeweiligen Übergangsmetalls, abweicht.

Erfindungsgemäß hergestellte Übergangsmetallhydroxide lassen sich gut zu Obergangmetallmischoxiden verarbeiten, die man zur Herstellung von Elektroden von Lithium-Ionen-Batterien verwenden kann.

Zur Herstellung von Übergangsmetallmischoxiden kann man so vorgehen, dass man eine Mischung von mindestens einem erfindungsgemäß hergestellten Übergangsmetallhydroxid und mindestens einer Lithiumverbindung bei Temperaturen im Bereich von 600 bis 1000°C thermisch behandelt.

Als Lithiumverbindungen sind beispielsweise metallorganische und bevorzugt anorganische Lithiumverbindungen geeignet. Besonders bevorzugte anorganische Lithiumverbindungen sind gewählt aus LiOH, Li₂CO₃, Li₂O und LiNO₃ sowie entsprechende Hydrate, beispielsweise LiOH·H₂O. Zum Vermischen kann man beispielsweise so vorgehen, dass man erfindungsgemäß hergestelltes Übergangsmetallhydroxid mit Lithiumverbindung in einem Feststoffmischer vermischt.

In einer Ausführungsform stellt man in der Mischung von erfindungsgemäß hergestelltem Übergangsmetallhydroxid und Lithiumverbindung die Stöchiometrie von Übergangsmetallmischoxid ein, und zwar so, dass das molare Verhältnis von Lithium zur Summe der Übergangsmetalle im Bereich von 0,9 bis 1,6, bevorzugt von 1 bis 1,25 und besonders bevorzugt bis 1,1 liegt. In einer anderen Ausführungsform stellt man die Stöchiometrie so ein, dass das molare Verhältnis von Lithium zur Summe der Übergangsmetalle etwa 0,5 beträgt, beispielsweise kann sie im Bereich von 0,4 bis 0,6 liegen.

In einer Ausführungsform stellt man die Stöchiometrie so ein, dass das molare Verhältnis von Lithium zur Summe der Übergangsmetalle etwa 1,4 beträgt, beispielsweise kann es im Bereich von 1,28 bis 1,52 liegen.

Hergestellte Übergangsmetallmischoxide sind sehr gut zu verarbeiten, beispielsweise aufgrund ihrer guten Rieselfähigkeit, und zeigen eine sehr gute Zyklenstabilität, wenn man elektrochemische Zellen herstellt unter Verwendung von erfindungsgemäß hergestelltem Übergangsmetallmischoxid.

Zur Herstellung von Elektroden kann man so vorgehen, dass man hergestellElektrodenmaterial kann neben Übergangsmetallmischoxid weiterhin Kohlenstoff in elektrisch leitfähiger Modifikation enthalten, beispielsweise als Ruß, Graphit, Graphen, Kohlenstoffnanoröhren oder Aktivkohle.

Elektrodenmaterial kann weiterhin mindestens ein Bindemittel enthalten, beispielsweise ein polymeres Bindemittel.

Geeignete Bindemittel sind vorzugsweise gewählt aus organischen (Co)polymeren. Geeignete (Co)polymere, also Homopolymere oder Copolymere, kann man beispielsweise wählen aus durch anionische, katalytische oder radikalische (Co)polymerisation erhältlichen (Co)polymeren, insbesondere aus Polyethylen, Polyacrylnitril, Polybutadien, Polystyrol, und Copolymeren von mindestens zwei Comonomeren, gewählt aus Ethylen, Propylen, Styrol, (Meth)acrylnitril und 1,3-Butadien. Außerdem ist Polypropylen geeignet. Weiterhin sind Polyisopren und Polyacrylate geeignet. Besonders bevorzugt ist Polyacrylnitril.

Unter Polyacrylnitril werden nicht nur Polyacrylnitril-Homopolymere verstanden, sondern auch Copolymere von Acrylnitril mit 1,3-Butadien oder Styrol. Bevorzugt sind Polyacrylnitril-Homopolymere.

Unter Polyethylen wird nicht nur Homo-Polyethylen verstanden, sondern auch Copolymere des Ethylens, die mindestens 50 mol-% Ethylen einpolymerisiert enthalten und bis zu 50 mol-% von mindestens einem weiteren Comonomer, beispielsweise α-Olefine wie Propylen, Butylen (1-Buten), 1-Hexen, 1-Octen, 1-Decen, 1-Dodecen, 1-Penten, weiterhin Isobuten, Vinylaromaten wie beispielsweise Styrol, weiterhin (Meth)acrylsäure, Vinylacetat, Vinylpropionat, C₁-C₁₀-Alkylester der (Meth)acrylsäure, insbesondere Methylacrylat, Methylmethacrylat, Ethylacrylat, Ethylmethacrylat, n-Butylacrylat, 2-Ethylhexylacrylat, n-Butylmethacrylat, 2-Ethylhexylmethacrylat, weiterhin Maleinsäure, Maleinsäureanhydrid und Itaconsäureanhydrid. Bei Polyethylen kann es sich um HDPE oder um LDPE handeln.

Unter Polypropylen wird nicht nur Homo-Polypropylen verstanden, sondern auch Copolymere des Propylens, die mindestens 50 mol-% Propylen einpolymerisiert enthalten und bis zu 50 mol-% von mindestens einem weiteren Comonomer, beispielsweise Ethylen und α-Olefine wie Butylen, 1-Hexen, 1-Octen, 1-Decen, 1-Dodecen und 1-Penten. Bei Polypropylen handelt es sich vorzugsweise um isotaktisches oder um im Wesentlichen isotaktisches Polypropylen.

Unter Polystyrol werden nicht nur Homopolymere des Styrols verstanden, sondern auch Copolymere mit Acrylnitril, 1,3-Butadien, (Meth)acrylsäure, C₁-C₁₀-Alkylester der (Meth)acrylsäure, Divinylbenzol, insbesondere 1,3-Divinylbenzol, 1,2-Diphenylethylen und α-Methylstyrol.

Ein anderes bevorzugtes Bindemittel ist Polybutadien.

Andere geeignete Bindemittel sind gewählt aus Polyethylenoxid (PEO), Cellulose, Carboxymethylcellulose, Polyimiden und Polyvinylalkohol.

In einer Ausführungsform wählt man Bindemittel aus solchen (Co)polymeren, die ein mittleres Molekulargewicht M_{w} im Bereich von 50.000 bis 1.000.000 g/mol, bevorzugt bis 500.000 g/mol aufweisen.

Bei Bindemitteln kann es sich um vernetzte oder unvernetzte (Co)polymere handeln.

In einer besonders bevorzugten Ausführungsform man Bindemittel aus halogenierten (Co)polymeren, insbesondere aus fluorierten (Co)polymeren. Dabei werden unter halogenierten bzw. fluorierten (Co)polymeren solche (Co)polymere verstanden, die mindestens ein (Co)monomer einpolymerisiert enthalten, das mindestens ein Halogenatom bzw. mindestens ein Fluoratom pro Molekül aufweist, bevorzugt mindestens zwei Halogenatome bzw. mindestens zwei Fluoratome pro Molekül.

Beispiele sind Polyvinylchlorid, Polyvinylidenchlorid, Polytetrafluorethylen, Polyvinylidenfluorid (PVdF), Tetrafluoroethylen-Hexafluorpropylen-Copolymere, Vinylidenfluorid-Hexafluorpropylen-Copolymere (PVdF-HFP), Vinylidenfluorid-Tetrafluorethylen-Copolymere, Perfluoralkylvinylether-Copolymere, Ethylen-Tetrafluorethylen-Copolymere, Vinylidenfluorid-Chlortrifluorethylen-Copolymere und Ethylen-Chlorfluorethylen-Copolymere.

Geeignete Bindemittel sind insbesondere Polyvinylalkohol und halogenierte (Co)polymere, beispielsweise Polyvinylchlorid oder Polyvinylidenchlorid, insbesondere fluorierte (Co)polymere wie Polyvinylfluorid und insbesondere Polyvinylidenfluorid und Polytetrafluorethylen.

Elektrisch leitfähiges, kohlenstoffhaltiges Material kann man beispielsweise aus Graphit, Ruß, Kohlenstoffnanoröhren, Graphen oder Mischungen von mindestens zwei der vorstehend genannten Stoffen wählen. Im Rahmen der vorliegenden Erfindung kann elektrisch leitfähiges, kohlenstoffhaltiges Material auch kurz als Kohlenstoff (B) bezeichnet werden.

In einer Ausführungsform handelt es sich bei elektrisch leitfähigem, kohlenstoffhaltigem Material um Ruß. Ruß kann beispielsweise gewählt werden aus Lampenruß, Ofenruß, Flammruß, Thermalruß, Acetylenruß, Industrieruß und Furnace Ruß. Ruß kann Verunreinigungen enthalten, beispielsweise Kohlenwasserstoffe, insbesondere aromatische Kohlenwasserstoffe, oder Sauerstoff-haltige Verbindungen bzw. Sauerstoff-haltige Gruppen wie beispielsweise OH-Gruppen. Weiterhin sind Schwefel- oder Eisen-haltige Verunreinigungen in Ruß möglich.

In einer Variante handelt es sich bei elektrisch leitfähigem, kohlenstoffhaltigem Material um partiell oxidierten Ruß.

In einer Ausführungsform handelt es sich bei elektrisch leitfähigem, kohlenstoffhaltigem Material um Kohlenstoffnanoröhren (englisch carbon nanotubes). Kohlenstoffnanoröhren (Kohlenstoffnanoröhren, kurz CNT oder englisch Carbon nanotubes), beispielsweise einwandige Kohlenstoffnanoröhren (englisch single-walled carbon nanotubes, SW CNT) und bevorzugt mehrwandige Kohlenstoffnanoröhren (englisch multi-walled carbon nanotubes, MW CNT), sind an sich bekannt. Ein Verfahren zu ihrer Herstellung und einige Eigenschaften werden beispielsweise von A. Jess et al. in Chemie Ingenieur Technik 2006, 78, 94 - 100 beschrieben.

In einer Ausführungsform haben Kohlenstoffnanoröhren einen Durchmesser im Bereich von 0,4 bis 50 nm, bevorzugt 1 bis 25 nm.

In einer Ausführungsform haben Kohlenstoffnanoröhren eine Länge im Bereich von 10 nm bis 1 mm, bevorzugt 100 nm bis 500 nm.

Kohlenstoffnanoröhren kann man nach an sich bekannten Verfahren herstellen. Beispielsweise kann man eine flüchtige Kohlenstoff-haltige Verbindung wie beispielsweise Methan oder Kohlenmonoxid, Acetylen oder Ethylen, oder ein Gemisch von flüchtigen Kohlenstoff-haltigen Verbindungen wie beispielsweise Synthesegas in Gegenwart von einem oder mehreren Reduktionsmitteln wie beispielsweise Wasserstoff und/oder einem weiteren Gas wie beispielsweise Stickstoff zersetzen. Ein anderes geeignetes Gasgemisch ist eine Mischung von Kohlenmonoxid mit Ethylen. Geeignete Temperaturen zur Zersetzung liegen beispielsweise im Bereich von 400 bis 1000°C, bevorzugt 500 bis 800°C. Geeignete Druckbedingungen für die Zersetzung sind beispielsweise im Bereich von Normaldruck bis 100 bar, bevorzugt bis 10 bar.

Ein- oder mehrwandige Kohlenstoffnanoröhren kann man beispielsweise durch Zersetzung von Kohlenstoff-haltigen Verbindungen im Lichtbogen erhalten, und zwar in Anwesenheit bzw. Abwesenheit eines Zersetzungskatalysators.

In einer Ausführungsform führt man die Zersetzung von flüchtiger Kohlenstoff-haltiger Verbindung bzw. Kohlenstoff-haltigen Verbindungen in Gegenwart eines Zersetzungskatalysators durch, beispielsweise Fe, Co oder bevorzugt Ni.

Unter Graphen werden im Rahmen der vorliegenden Erfindung fast ideal oder ideal zweidimensionale hexagonale Kohlenstoffkristalle verstanden, die analog zu einzelnen Graphitschichten aufgebaut sind.

In einer Ausführungsform liegt das Gewichtsverhältnis von modifiziertem Ubergangsmetallmischoxid und elektrisch leitfähigem, kohlenstoffhaltigem Material im Bereich von 200:1 bis 5:1, bevorzugt 100:1 bis 10:1.

Offenbart wird weiterhin eine Elektrode, enthaltend mindestens ein wie vorstehend hergestelltes Übergangsmetallmischoxid mindestens ein elektrisch leitfähiges, kohlenstoffhaltiges Material und mindestens ein Bindemittel.

Übergangsmetallmischoxid und elektrisch leitfähiges, kohlenstoffhaltiges Material sind vorstehend beschrieben.

In einer Ausführungsform enthält hergestelltes Elektrodenmaterial:
im Bereich von 60 bis 98 Gew.-%. bevorzugt 70 bis 96 Gew.-% Übergangsmetallmischoxid,
im Bereich von 1 bis 20 Gew.-%, bevorzugt 2 bis 15 Gew.-% Bindemittel,
im Bereich von 1 bis 25 Gew.-% bevorzugt 2 bis 20 Gew.-% elektrisch leitfähiges, kohlenstoffhaltiges Material.

Die Geometrie von Elektroden kann man in weiten Grenzen wählen. Bevorzugt ist es, erfindungsgemäße Elektroden in dünnen Filmen auszugestalten, beispielsweise in Filmen mit einer Dicke im Bereich von 10 µm bis 250 µm, bevorzugt 20 bis 130 µm.

In einer Ausführungsform umfassen Elektroden eine Folie, beispielsweise eine Metallfolie, insbesondere eine Aluminiumfolie, oder eine Polymerfolie, beispielsweise eine Polyesterfolie, die unbehandelt oder silikonisiert sein kann.

Weiterhin wird die Verwendung von hergestellten Elektrodenmaterialien bzw. entsprechenden Elektroden in elektrochemischen Zellen offenbart.

Hergestellte Elektroden dienen in elektrochemischen Zellen definitionsgemäß als Kathoden. Entsprechende elektrochemische Zellen enthalten eine Gegenelektrode, die als Anode definiert wird und die beispielsweise eine Kohlenstoff-Anode, insbesondere eine Graphit-Anode, eine Lithium-Anode, eine Silizium-Anode oder eine Lithium-Titanat-Anode sein kann.

Bei elektrochemischen Zellen kann es sich beispielsweise um Batterien oder um Akkumulatoren handeln.

Elektrochemische Zellen können neben Anode und Elektrode weitere Bestandteile umfassen, beispielsweise Leitsalz, nicht-wässriges Lösungsmittel, Separator, Stromableiter, beispielsweise aus einem Metall oder einer Legierung, weiterhin Kabelverbindungen und Gehäuse.

Elektrische Zellen enthalten mindestens ein nicht-wässriges Lösungsmittel, das bei Zimmertemperatur flüssig oder fest sein kann, bevorzugt gewählt aus Polymeren, cyclischen oder nicht-cyclischen Ethern, cyclischen und nicht-cyclischen Acetalen und cyclischen oder nicht cyclischen organischen Carbonaten.

Beispiele für geeignete Polymere sind insbesondere Polyalkylenglykole, bevorzugt Poly-C₁-C₄-alkylenglykole und insbesondere Polyethylenglykole. Dabei können Polyethylenglykole bis zu 20 mol-% ein oder mehrere C₁-C₄-Alkylenglykole einpolymerisiert enthalten. Vorzugsweise handelt es sich bei Polyalkylenglykolen um zweifach mit Methyl oder Ethyl verkappte Polyalkylenglykole.

Das Molekulargewicht M_{w} von geeigneten Polyalkylenglykolen und insbesondere von geeigneten Polyethylenglykolen kann mindestens 400 g/mol betragen.

Das Molekulargewicht M_{w} von geeigneten Polyalkylenglykolen und insbesondere von geeigneten Polyethylenglykolen kann bis zu 5.000.000 g/mol betragen, bevorzugt bis zu 2.000.000 g/mol betragen

Beispiele für geeignete nicht-cyclische Ether sind beispielsweise Diisopropylether, Di-n-Butylether, 1,2-Dimethoxyethan, 1,2-Diethoxyethan, bevorzugt ist 1,2-Dimethoxyethan.

Beispiele für geeignete cyclische Ether sind Tetrahydrofuran und 1,4-Dioxan.

Beispiele für geeignete nicht-cyclische Acetale sind beispielsweise Dimethoxymethan, Diethoxymethan, 1,1-Dimethoxyethan und 1,1-Diethoxyethan.

Beispiele für geeignete cyclische Acetale sind 1,3-Dioxan und insbesondere 1,3-dioxolan.

Beispiele für geeignete nicht-cyclische organische Carbonate sind Dimethylcarbonat, Ethylmethylcarbonat und Diethylcarbonat.

Beispiele für geeignete cyclische organische Carbonate sind Verbindungen der allgemeinen Formeln (II) und (III) 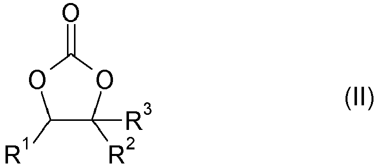 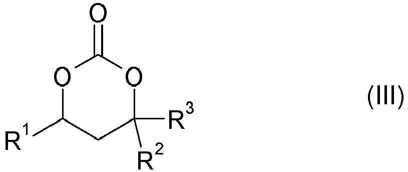 bei denen R¹, R² und R³ gleich oder verschieden sein können und gewählt aus Wasserstoff und C₁-C₄-Alkyl, beispielsweise Methyl, Ethyl, n-Propyl, iso-Propyl, n-Butyl, iso-Butyl, sec.-Butyl und tert.-Butyl, wobei vorzugsweise R² und R³ nicht beide tert.-Butyl sind.

In besonders bevorzugten Ausführungsformen ist R¹ Methyl und R² und R³ sind jeweils Wasserstoff, oder R¹, R² und R³ sind jeweils gleich Wasserstoff.

Ein anderes bevorzugtes cyclisches organisches Carbonat ist Vinylencarbonat, Formel (IV).

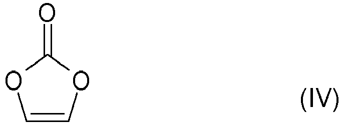

Vorzugsweise setzt man das oder die Lösungsmittel im so genannten wasserfreien Zustand ein, d.h. mit einem Wassergehalt im Bereich von 1 ppm bis 0,1 Gew.-%, bestimmbar beispielsweise durch Karl-Fischer-Titration.

Elektrochemische Zellen enthalten weiterhin mindestens ein Leitsalz. Geeignete Leitsalze sind insbesondere Lithiumsalze. Beispiele für geeignete Lithiumsalze sind LiPF₆, LiBF₄, LiClO₄, LiAsF₆, LiCF₃SO₃, LiC(CₙF₂ₙ₊₁SO₂)₃, Lithiumimide wie LiN(CₙF₂ₙ₊₁SO₂)₂, wobei n eine ganze Zahl im Bereich von 1 bis 20 ist, LiN(SO₂F)₂, Li₂SiF₆, LiSbF₆, LiAlCl₄, und Salze der allgemeinen Formel (CₙF₂ₙ₊₁SO₂)ₜYLi, wobei t wie folgt definiert ist:
t = 1, wenn Y gewählt wird aus Sauerstoff und Schwefel,
t = 2, wenn Y gewählt wird aus Stickstoff und Phosphor, und
t = 3, wenn Y gewählt wird aus Kohlenstoff und Silizium.

Bevorzugte Leitsalze sind gewählt aus LiC(CF₃SO₂)₃, LiN(CF₃SO₂)₂, LiPF₆, LiBF₄, LiClO₄, und besonders bevorzugt sind LiPF₆ und LiN(CF₃SO₂)₂.

In einer Ausführungsform enthalten elektrochemische Zellen einen oder mehrere Separatoren, durch die die Elektroden mechanisch getrennt sind. Als Separatoren sind Polymerfilme, insbesondere poröse Polymerfilme, geeignet, die gegenüber metallischem Lithium unreaktiv sind. Besonders geeignete Materialien für Separatoren sind Polyolefine, insbesondere filmförmiges poröses Polyethylen und filmförmiges poröses Polypropylen.

Separatoren aus Polyolefin, insbesondere aus Polyethylen oder Polypropylen, können eine Porosität im Bereich von 35 bis 45% haben. Geeignete Porendurchmesser liegen beispielsweise im Bereich von 30 bis 500 nm.

In einer anderen Ausführungsform kann man Separatoren aus mit anorganischen Partikeln gefüllten PET-Vliesen wählen. Derartige Separatoren können eine Porosität im Bereich von 40 bis 55 % aufweisen. Geeignete Porendurchmesser liegen beispielsweise im Bereich von 80 bis 750 nm.

Elektrochemische Zellen enthalten weiterhin ein Gehäuse, das beliebige Form haben kann, beispielsweise quaderförmig oder die Form einer zylindrischen Scheibe. In einer Variante wird als Gehäuse eine als Beutel ausgearbeitete Metallfolie eingesetzt.

Elektrochemische Zellen liefern eine hohe Spannung und zeichnen sich aus durch eine hohe Energiedichte und gute Stabilität aus.

Elektrochemische Zellen lassen sich miteinander kombinieren, beispielsweise in Reihenschaltung oder in Parallelschaltung. Reihenschaltung ist bevorzugt.

Elektrochemische Zellen kann man in Geräten v, insbesondere in mobilen Geräten. Beispiele für mobile Geräte sind Fahrzeuge, beispielsweise Automobile, Zweiräder, Flugzeuge oder Wasserfahrzeuge wie Boote oder Schiffe. Andere Beispiele für mobile Geräte sind solche, die man selber bewegt, beispielsweise Computer, insbesondere Laptops, Telefone oder elektrische Handwerkszeuge, beispielsweise aus dem Bereich des Bauens, insbesondere Bohrmaschinen, Akkubohrschrauber oder Akku-Tacker.

Die Verwendung von hergestellten elektrochemischen Zellen in Geräten bietet den Vorteil einer längeren Laufzeit vor dem Nachladen. Wollte man mit elektrochemischen Zellen mit geringerer Energiedichte eine gleiche Laufzeit verwirklichen, so müsste man ein höheres Gewicht für elektrochemische Zellen in Kauf nehmen.

Die Erfindung wird durch Arbeitsbeispiele erläutert.

5,7 l aufwies sowie ein Aggregat in Form einer Kreiselpumpe mit einem Volumen (Pumpeninnenvolumen) von 0,04 I in einem Umpumpkreislauf, das einschließlich Aggregat ein Volumen von 0,3 I aufwies.

Das Aggregat kann eine mechanische Arbeit von bis zu 45 W an der Suspension leisten. Das Aggregat wirkte flüssigkeitsfördernd und kann einen Volumenstrom von bis 1200 l/h aufrecht erhalten. Im Rührkessel wurde eine mechanische Rührleistung von 30 W gemessen. Die mittlere Verweilzeit im Rührkessel betrug 10 Stunden.

Aus dem Volumenstrom und dem Gesamtvolumen ergab sich, dass die Suspension im Mittel alle 18 s (1/2000 der mittleren Verweilzeit) einer mechanischen Beanspruchung im Aggregat ausgesetzt war. Der Leistungseintrag im Aggregat errechnete sich zu 1125 W/l. Die Verweilzeit der Suspension im Aggregat betrug im Mittel 120 ms (Millisekunden).

Der mechanische Leistungseintrag bezogen auf das Gesamtsystem betrug 12,5 W/l.

Das Reaktorsystem war ausgestattet mit Schrägblattrührer und Strombrecher. Die Rührleistungsmessung erfolgte über einen elektrischen Motor mit Drehmomentmessung aus Drehzahl und Drehmoment. Weiterhin wies das Reaktorsystem mehrere Dosiereinheiten mit Dosierpumpen auf, weiterhin einen Überlauf, durch den Reaktionsmischung abgezogen wurde.

Man setzte die folgenden Lösungen ein:
Lösung A: enthielt je 0,55 mol pro kg Lösung Nickelsulfat, Kobaltsulfat und Mangansulfat als Sulfate, hergestellt durch Auflösen der entsprechenden Hydratkomplexe in Wasser.
Lösung B: enthielt 4,4 mol NaOH pro kg Lösung und 1,3 mol NH₃ pro kg Lösung. Hergestellt aus 50%iger NaOH und 25%iger Ammoniaklösung durch Verdünnen mit Wasser.
Lösung C: enthielt 4,4 mol NaOH pro kg Lösung.

Man dosierte über Dosierpumpen.

### 1. Erfindungsgemäßes Beispiel 1

Man spülte das Reaktorsystem mit 40 Nl/h Stickstoff (Normliter). Dann dosierte man über Dosierpumpen die Lösungen A und B bei konstantem Massestrom (301 g/h bzw. 200 g/h) in die turbulente Zone der Nähe der Rührblätter des Rührkessels des Reaktorsystems zu. Durch eine Regeleinrichtung wurde der pH-Wert mittels Zugabe von Lösung C konstant bei 11,3 gehalten. Es bildete sich eine Suspension. Man stellte die Temperatur der Suspension auf 45°C ein. Der pH-Wert wurde durch Zugabe von Lösung C auf 11,3 eingestellt (gemessen bei 23°C). Die mittlere Verweilzeit der Suspension im Reaktorsystem betrug 15 Stunden. Nach 3 Tagen war der stationäre Zustand erreicht.

Die Rührerleistung betrug 40 W, die eingetragene Leistung im Aggregat 45 W. Die Flussgeschwindigkeit im Aggregat betrug 1200 l/h.

Man erhielt eine Suspension von Übergangsmetallhydroxid, das ein molares Verhältnis Ni:Co:Mn von 33:34:33 aufwies. Die aus dem Überlauf erhaltene Übergangsmetallhydroxidsuspension wurde über eine Filternutsche filtriert, der Filterkuchen wurde mit Wasser, 3 Gew.-% NaOH und wiederum Wasser gewaschen und bei 105°C über einen Zeitraum von 12 Stunden getrocknet. Das so erhältliche erfindungsgemäße Übergangsmetallhydroxid ÜM.1 (21,2% Ni; 22,1% Co; 20,3% Mn; Formel Ni_{0,33}Co_{0,34}Mn_{0,33}(OH)_{1,17}O_{0,83}(SO₄)_{0,003}) wurde gesiebt (Maschenweite 50 µm) und die Stampfdichte bestimmt.

Zur Bestimmung der Stampfdichte in einem Elektrodenmaterial wurde eine Teilmenge des Übergangsmetallhydroxids ÜM.1 mit Lithiumcarbonat vermischt und bei 900°C getempert. Dazu wurden 41,18 g Lithiumcarbonat (99,6% Li₂CO₃, gesiebt, 100% <50 µm) mit 90,35 g Übergangsmetallhydroxid ÜM.1 in einer Kugelmühle gemischt, in einen Tiegel überführt und in einem Muffelofen kalziniert (107 Minuten heizen bis 350°C, 4 Stunden halten, 107 Minuten heizen bis 675°C, 4 Stunden halten, 75 Minuten heizen bis 900°C, 6 Stunden halten; dann Abkühlen auf Raumtemperatur im Ofen). Das erhaltene Material wurde <32 µm gesiebt und die Stampfdichte bestimmt.

### 2. Vergleichsbeispiel V-2

Man ging vor wie unter 1. beschrieben, jedoch verschloss man das Aggregat und den Umpumpkreislauf.

Man erhielt eine Suspension von Übergangsmetallhydroxid, das ein molares Verhältnis Ni:Co:Mn von 33:34:33 aufwies. Die aus dem Überlauf erhaltene Metallhydroxidsuspension wurde über eine Filternutsche filtriert, der Filterkuchen wurde mit Wasser, 3 Gew.-% NaOH und wiederum Wasser gewaschen und bei 105°C über einen Zeitraum von 12 Stunden getrocknet. Das so erhältliche Übergangsmetallhydroxid V-ÜM.2 (22,2% Ni; 22,2% Co; 20,0% Mn) wurde gesiebt (Maschenweite 50 µm) und die Stampfdichte bestimmt.

Zur Bestimmung der Stampfdichte in einem Elektrodenmaterial (Kathodenmaterial) wurde eine Teilmenge des Übergangsmetallhydroxids V-ÜM.2 mit Lithiumcarbonat vermischt und bei 900°C getempert. Dazu wurden 41,26 g Lithiumcarbonat (99,4% Li₂CO₃, gesiebt, 100% <50 µm) mit 89,23 g Übergangsmetallhydroxid V-ÜM.2 in einer Kugelmühle gemischt, in einen Tiegel überführt und kalziniert (107 Minuten heizen bis 350°C, 4 Stunden halten, 107 Minuten heizen bis 675°C, 4 Stunden halten, 75 Minuten heizen bis 900°C, 6 Stunden halten; dann Abkühlen auf Raumtemperatur im Ofen). Das erhaltene Material wurde <32 µm gesiebt und die Stampfdichte bestimmt.

### 3. Vergleichsbeispiel V-3

Man ging vor wie unter 1. beschrieben, jedoch wählte man ein kleineres Aggregat mit einem Volumen von 0,015 l. Die Flussgeschwindigkeit im Aggregat betrug 300 l/h. Dadurch wurden nur 8W/53W, d.h. 15% der mechanischen Leistung, im Kompartiment, also bei hoher Leistungsdichte eingebracht.

Man erhielt eine Suspension von Übergangsmetallhydroxid, das ein molares Verhältnis Ni:Co:Mn von 33:34:33 aufwies. Die aus dem Überlauf erhaltene Übergangsmetallhydroxidsuspension wurde über eine Filternutsche filtriert, der Filterkuchen wurde mit Wasser, 3 Gew.-% NaOH und wiederum Wasser gewaschen und bei 105°C über einen Zeitraum von 12 Stunden getrocknet. Das so erhältliche Übergangsmetallhydroxid V-ÜM.3 (21,6% Ni; 22,1% Co; 19,8% Mn; Formel Ni_{0,33}Co_{0,34}Mn_{0,33}(OH)_{1,14}O_{0,86}(SO₄)_{0,003}) wurde gesiebt (Maschenweite 50 µm) und die Stampfdichte bestimmt.

Zur Bestimmung der Stampfdichte in einem Elektrodenmaterial (Kathodenmaterial) wurde eine Teilmenge des Übergangsmetallhydroxids V-ÜM.3 mit Lithiumcarbonat vermischt und bei 900°C getempert. Dazu wurden 41,26 g Lithiumcarbonat (99,4% Li₂CO₃, gesiebt, 100% <50 µm) mit 90,64 g Übergangsmetallhydroxid V-ÜM.3 in einer Kugelmühle gemischt, in einen Tiegel überführt und kalziniert (107 Minuten heizen bis 350°C, 4 Stunden halten, 107 Minuten heizen bis 675°C, 4 Stunden halten, 75 Minuten heizen bis 900°C, 6 Stunden halten; dann Abkühlen auf Raumtemperatur im Ofen). Das erhaltene Material wurde <32 µm gesiebt und die Stampfdichte bestimmt.

**Tabelle 1.**

| Beispiel | Rührerleistung Rührkessel (W) | Leistung Aggregat (W) | Leistungsdichte Aggregat (W/l) | SD Hydroxid (kg/l) | (D50) Hydroxid (µm) | SD Mischoxid (kg/l) | (D50) Mischoxid (µm) |
|---|---|---|---|---|---|---|---|
| ÜM.1 | 40 | 45 | 1071 | 2,26 | 7,5 | 2,34 | 7,7 |
| V-ÜM.2 | 39 | -- | -- | 2,02 | 6,9 | 2,14 | 7,6 |
| V-ÜM.3 | 45 | 8 | 544 | 2,05 | 7,2 | 2,01 | 8,2 |

| | | | | | | | |
|---|---|---|---|---|---|---|---|
| SD: Stampfdichte, gemessen mit einem Stampfvolumeter STAV II, Fa. Engelsmann, Ludwigshafen, 2000 Schläge. | | | | | | | |

## Patentansprüche

1. Verfahren zur Herstellung von Übergangsmetallhydroxiden mit einem mittleren Partikeldurchmesser im Bereich von 6 bis 12 µm (D50), **dadurch gekennzeichnet, dass** man in einem Rührgefäß mindestens eine Lösung von mindestens einem Übergangsmetallsalz mit mindestens einer Lösung von mindestens einem Alkalimetallhydroxid vereint und dadurch eine wässrige Suspension von Übergangsmetallhydroxid herstellt, und dass man in mindestens einem separaten Kompartiment kontinuierlich jeweils in einem Anteil der Suspension eine mechanische Leistung im Bereich von 50 bis 10.000 W/l einbringt, bezogen auf den Anteil der Suspension, und danach den Anteil in das Rührgefäß rückführt.

2. Verfahren nach Anspruch 1, **dadurch gekennzeichnet, dass** Übergangsmetall gewählt wird aus Cr, V, Mn, Ni, Fe, Co, Zn und Mischungen von einem oder mehreren der vorstehend genannten miteinander oder mit Alkalimetall, Aluminium oder Magnesium.

3. Verfahren nach Anspruch 1 oder 2, **dadurch gekennzeichnet, dass** man insgesamt eine mittlere Leistung im Bereich von 2 bis 25 W/l einbringt, bezogen auf gesamte Suspension.

4. Verfahren nach einem der Ansprüche 1 bis 3, **dadurch gekennzeichnet, dass** man mindestens 20% der insgesamt eingetragenen mechanischen Leistung bei einer Leistungsdichte von 50 bis 10.000 W/l einbringt.

5. Verfahren nach einem der Ansprüche 1 bis 4, **dadurch gekennzeichnet, dass** man das oder die separaten Kompartimente wählt aus Pumpen, Einsätzen, Mischaggregaten, Nassmühlen, Rührkesseln und Homogenisatoren.

6. Verfahren nach einem der Ansprüche 1 bis 5, **dadurch gekennzeichnet, dass** man das oder die separaten Kompartimente über einen Umpumpkreis mit dem Rührgefäß verbindet.

7. Verfahren nach einem der Ansprüche 1 bis 6. **dadurch gekennzeichnet, dass** man mit einem mittleren Feststoffgehalt der Suspension im Bereich von 70 bis 1000 g/l arbeitet.

8. Verfahren nach einem der Ansprüche 1 bis 7, **dadurch gekennzeichnet, dass** Übergangsmetall gewählt wird aus Mischungen von Ni. Mn, Co und gegebenenfalls einem oder mehrere weiteren Metall, gewählt aus Alkalimetall, Aluminium und Magnesium.

9. Verfahren nach einem der Ansprüche 1 bis 8, **dadurch gekennzeichnet, dass** man ausgefälltes Übergangsmetallhydroxid von der Mutterlauge abtrennt und Partikel mit einem Durchmesser größer als 50 µm abtrennt.

10. Verfahren nach Anspruch 9, **dadurch gekennzeichnet, dass** man Partikel von Übergangsmetallhydroxid mit einem Durchmesser größer als 30 µm abtrennt.

## Claims

1. A process for preparing transition metal hydroxides with a mean particle diameter in the range from 6 to 12 µm (D50), which comprises combining, in a stirred vessel, at least one solution of at least one transition metal salt with at least one solution of at least one alkali metal hydroxide to prepare an aqueous suspension of transition metal hydroxide, and, in at least one separate compartment, continuously introducing a mechanical power in the range from 50 to 10 000 W/l in a proportion of the suspension in each case, based on the proportion of the suspension, and then recycling the proportion into the stirred vessel.

2. The process according to claim 1, wherein transition metal is selected from Cr, V, Mn, Ni, Fe, Co, Zn and mixtures of one or more of the aforementioned with one another or with alkali metal, aluminum or magnesium.

3. The process according to claim 1 or 2, wherein an overall mean power in the range from 2 to 25 W/l is introduced, based on overall suspension.

4. The process according to any of claims 1 to 3, wherein at least 20% of the mechanical power introduced overall is introduced at a power density of 50 to 10 000 W/l.

5. The process according to any of claims 1 to 4, wherein the separate compartment(s) is/are selected from pumps, inserts, mixing units, wet mills, stirred tanks and homogenizers.

6. The process according to any of claims 1 to 5, wherein the separate compartment(s) is/are connected to the stirred vessel via a pumped circulation system.

7. The process according to any of claims 1 to 6, wherein a mean solids content of the suspension in the range from 70 to 1000 g/l is employed.

8. The process according to any of claims 1 to 7, wherein transition metal is selected from mixtures of Ni, Mn, Co and optionally one or more further metals selected from alkali metal, aluminum and magnesium.

9. The process according to any of claims 1 to 8, wherein precipitated transition metal hydroxide is removed from the mother liquor and particles with a diameter greater than 50 µm are removed.

10. The process according to claim 9, wherein particles of transition metal hydroxide with a diameter greater than 30 µm are removed.

## Revendications

1. Procédé de fabrication d'hydroxydes de métaux de transition ayant un diamètre de particule moyen dans la plage allant de 6 à 12 µm (D50), **caractérisé en ce qu'**au moins une solution d'au moins un sel de métal de transition est combinée avec au moins une solution d'au moins un hydroxyde de métal alcalin dans un récipient agité, et une suspension aqueuse de l'hydroxyde de métal de transition est ainsi préparée, et **en ce qu'**une puissance mécanique dans la plage allant de 50 à 10 000 W/l est introduite en continu à chaque fois dans une fraction de la suspension dans au moins un compartiment séparé, par rapport à la fraction de la suspension, puis la fraction est recyclée dans le récipient agité.

2. Procédé selon la revendication 1, **caractérisé en ce que** le métal de transition est choisi parmi Cr, V, Mn, Ni, Fe, Co, Zn et les mélanges d'un ou de plusieurs des métaux susmentionnés les uns avec les autres ou avec un métal alcalin, l'aluminium ou le magnésium.

3. Procédé selon la revendication 1 ou 2, **caractérisé en ce qu'**une puissance moyenne dans la plage allant de 2 à 25 W/l est introduite au total, par rapport à la suspension totale.

4. Procédé selon l'une quelconque des revendications 1 à 3, **caractérisé en ce qu'**au moins 20 % de la puissance mécanique introduite au total est introduite à une densité de puissance de 50 à 10 000 W/l.

5. Procédé selon l'une quelconque des revendications 1 à 4, **caractérisé en ce que** le ou les compartiments séparés sont choisis parmi les pompes, les inserts, les appareils de mélange, les broyeurs humides, les cuves agitées et les homogénéisateurs.

6. Procédé selon l'une quelconque des revendications 1 à 5, **caractérisé en ce que** le ou les compartiments séparés sont connectés avec le récipient agité par un circuit de pompage.

7. Procédé selon l'une quelconque des revendications 1 à 6, **caractérisé en ce qu'**une teneur en solides moyenne de la suspension dans la plage allant de 70 à 1 000 g/l est utilisée.

8. Procédé selon l'une quelconque des revendications 1 à 7, **caractérisé en ce que** le métal de transition est choisi parmi les mélanges de Ni, Mn, Co et éventuellement un ou plusieurs métaux supplémentaires choisis parmi un métal alcalin, l'aluminium et le magnésium.

9. Procédé selon l'une quelconque des revendications 1 à 8, **caractérisé en ce que** l'hydroxyde de métal de transition précipité est séparé de la liqueur mère et les particules d'un diamètre supérieur à 50 µm sont séparées.

10. Procédé selon la revendication 9, **caractérisé en ce que** les particules d'hydroxyde de métal de transition d'un diamètre supérieur à 30 µm sont séparées.
